(19) Europäisches Patentamt / European Patent Office / Office européen des brevets

(11) **EP 2 954 292 B1**

(12) **EUROPÄISCHE PATENTSCHRIFT**

(45) Veröffentlichungstag und Bekanntmachung des Hinweises auf die Patenterteilung:
**17.01.2018  Patentblatt 2018/03**

(21) Anmeldenummer: **13824093.2**

(22) Anmeldetag: **27.11.2013**

(51) Int Cl.:
*G01F 1/58* (2006.01)    *G01F 1/60* (2006.01)

(86) Internationale Anmeldenummer:
**PCT/DE2013/000726**

(87) Internationale Veröffentlichungsnummer:
**WO 2014/121766 (14.08.2014 Gazette 2014/33)**

(54) **MAGNETISCH INDUKTIVE DURCHFLUSSMESSEINRICHTUNG**

ELECTROMAGNETIC FLOW METER

DÉBITMÈTRE ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.02.2013  DE 102013002295**

(43) Veröffentlichungstag der Anmeldung:
**16.12.2015  Patentblatt 2015/51**

(73) Patentinhaber: **SIKA Dr.Siebert & Kühn GmbH & Co. KG.**
**34260 Kaufungen (DE)**

(72) Erfinder:
• **WEISS, Eike Christian**
  **D-34121 Kassel (DE)**
• **FRIEDRICHS, René**
  **D-37075 Göttingen (DE)**

(74) Vertreter: **Patentanwälte Walther Hinz Bayer PartGmbB**
**Heimradstrasse 2**
**34130 Kassel (DE)**

(56) Entgegenhaltungen:
EP-A1- 0 069 459          DE-A1- 19 708 857
DE-A1-102005 060 208   US-A- 3 323 363
US-A- 3 937 080

**Beschreibung**

Die Erfindung betrifft eine magnetisch induktive Durchflussmesseinrichtung (MID) zur Ermittlung der Strömungsgeschwindigkeit eines flüssigen oder gasförmigen Mediums in einem Rohrleitungsabschnitt, wobei die Durchflussmesseinrichtung mindestens zwei Messelektroden in einem durch eine Magnetfelderzeugungseinrichtung erzeugten Magnetfeld aufweist, wobei die Magnetfelderzeugungseinrichtung zumindest partiell innerhalb des freien Querschnitts des Rohrleistungsabschnitts angeordnet ist, wobei die Magnetfelderzeugungseinrichtung eine Halterung zur Aufnahme mindestens eines Magnetfelderzeugers und die mindestens zwei Messelektroden aufweist.

Magnetisch induktive Durchflussmesseinrichtungen, kurz "MID's" genannt, sind aus dem Stand der Technik hinreichend bekannt. Hierbei wird das Prinzip der magnetischen Induktion genutzt, um Strömungsgeschwindigkeiten in einem Rohr oder Rohrleitungsabschnitt zu ermitteln. Aus der Strömungsgeschwindigkeit und dem Querschnitt des Rohrs lässt sich dann die Durchflussmenge pro Zeiteinheit ermitteln.

Mit einer solchen Messeinrichtung wird im Einzelnen die Fließgeschwindigkeit eines Mediums wie folgt bestimmt. Es wird durch eine Magnetfelderzeugungseinrichtung ein Magnetfeld im Bereich des freien Querschnittes eines Rohrleitungsabschnittes erzeugt. Im Bereich des Magnetfeldes befinden sich zwei Messelektroden im Rohrleitungsabschnitt, die mit dem leitfähigen Medium in Kontakt stehen, eine Ausnahme besteht bei kapazitivem Abgriff durch die Messelektroden. Wird ein leitfähiges Medium von einem Magnetfeld senkrecht zu dessen Durchflussrichtung durchdrungen, werden die freien Ladungsträger des Mediums von dem Magnetfeld quer zur Durchflussrichtung und quer zum Magnetfeld abgelenkt. Hieraus resultiert eine Spannungsdifferenz, die senkrecht zur Durchflussrichtung und senkrecht zum Magnetfeld ausgerichtet ist. Die Spannungsdifferenz wird bei entsprechender Anordnung der Messelektroden abgegriffen und gemessen. Für diese sogenannte induzierte Spannung $U_i$ gilt dann vereinfacht der Zusammenhang

$$U_i = k \; \vec{D} \; * \; (\vec{v} \; \times \; \vec{B})$$

mit

$U_i$ = induzierte Spannung
k = vom Medium und der (Magnetfeld-) Geometrie abhängige Proportionalitätskonstante
$\vec{D}$ = Distanzvektor zwischen den Messelektroden
$\vec{v}$ = Strömungsgeschwindigkeit des Mediums im Bereich des Magnetfeldes
$\vec{B}$ = Vektor der magnetischen Flussdichte.

Aus diesem Zusammenhang geht hervor, dass bei konstanter Flussdichte und fester Position der Messelektroden die induzierte Spannung proportional zur Strömungsgeschwindigkeit ist.

In diesem Zusammenhang ist aus einem bekannten Stand der Technik gemäß der US 6,530,285 B1 ein MID bekannt, bei dem auf einer Rohrleitung eine Magnetfelderzeugungseinrichtung angeordnet ist, wobei im Bereich des durch die Magnetfelderzeugungseinrichtung erzeugten Magnetfeldes innerhalb der Rohrleitung in Kontakt mit dem Medium einander in der Rohrleitung gegenüberliegend zwei Messelektroden vorgesehen sind. Eine ähnliche Konstruktion ergibt sich auch aus dem weiteren Stand der Technik gemäß der DE 10 2007 004 827 B4. Auch hieraus ist bekannt, die Magnetfelderzeugungseinrichtung auf dem Umfang des Messrohres und die Messelektroden auf der Innenseite des von dem Medium durchströmten Messrohres anzuordnen.

Die aus dem Stand der Technik bekannte Ausbildung von MID's hat verschiedene Nachteile. So muss, bedingt durch die Anordnung der Magnetfeldererzeugungseinrichtung auf dem Außenumfang des Messrohres, unter anderem das Magnetfeld durch die Rohrwand in das Rohrvolumen bzw. in das Messmedium geführt werden. Das Einbringen des Magnetfeldes durch die Rohrwand hindurch in das Medium ist zum einen aufwendig und bedingt zum anderen auch eine Schwächung des Magnetfeldes durch die Entstehung von Streufeldern. Damit somit die Stärke des Magnetfeldes im Medium für eine genaue Messung ausreichend ist, muss das erzeugte Magnetfeld entsprechend stärker sein. Dies erfordert größere Spulenströme bzw. Spulen mit mehr Wicklungen und entsprechend hohen Induktivitäten. Dies bedingt weiterhin eine hohe Leistungsaufnahme und eine entsprechend ungünstige Wärmeentwicklung.

Darüber hinaus sollte das Messrohr bei Wechselfeldbetrieb nicht aus einem elektrisch leitfähigem Material also z. B. Metall ausgebildet sein.

Aus der US 3,937,080 A1 ist ein MID der gattungsgemäßen Art bekannt, bei dem die Magnetfeldeinrichtung teilweise innerhalb des Rohrabschnitts angeordnet ist.

Durch die Anordnung der Magnetfelderzeugungseinrichtung zumindest partiell innerhalb des freien Querschnittes des Rohrleitungsabschnittes oder sogar vollständig innerhalb des freien Querschnittes des Rohrleitungsabschnittes wird erreicht, dass die volle Magnetfeldstärke unmittelbar im Messmedium zur Verfügung steht. Dies hat aber auch zur Folge, dass Magnetfelderzeugungseinrichtungen mit geringerer Leistungsaufnahme, insbesondere also auch Spulen zum Einsatz gelangen können, mit weniger Wicklungen bzw. es können auch Platinen mit weniger Leiterbahnen oder Leiterschleifen eingesetzt werden. Für den Fall, dass ein oder mehrere Permanentmagnete zum Einsatz gelangen, können diese ebenfalls schwächer ausgebildet werden. Weiterhin hat sich als vorteilhaft herausgestellt, dass die Magnetfelderzeugungseinrichtung, also z. B. die Spule durch das Medium gekühlt wird, sodass höhere Ströme bzw. entsprechend größere Magnetfelder möglich sind, was Vorteile hinsichtlich der Messgenauigkeit hat. Darüber hinaus wird die Möglichkeit eröffnet, die Temperatur des Mediums über die Widerstandsänderung z. B. der Spule zu bestimmen. Insofern ist auch eine Überwachung der Spulentemperatur durch Messung des Spulenwiderstands möglich.

Wenn das Magnetfeld innerhalb des freien Querschnitts des Rohrleitungsabschnittes erzeugt wird, muss das Magnetfeld nicht mehr durch die Wandung des Rohrabschnittes bzw. des Messrohres geführt werden, was es erlaubt eine magnetisierbare Messrohrwand aus einem Material mit einer relativen Permeabilität von größer als 1 zu verwenden, um das Messvolumen gegen externe magnetische Störfelder abzuschirmen. Auch dient das Material des Rohrabschnitts dem Rückfluss der Magnetfeldlinien. Insofern sind nunmehr auch Messrohre, z. B. aus Stahl einsetzbar, die druckbeständiger sind als z. B. Kunststoffrohre gleicher Wandstärke. Darüber hinaus wird durch die Anordnung der Magnetfelderzeugungseinrichtung innerhalb des Mediums auch die Möglichkeit der kapazitiven Messung mit Messelektroden eröffnet, die nicht vom Messmedium benetzt werden, da ein elektrisch leitfähiges Messrohr aus beispielsweise Metall elektrische Störfelder hinreichend abschirmt. Nachteilig am bekannten Stand der Technik ist allerdings, dass dadurch, dass Magnetfelderzeuger und Messelektrode gesonderte Bauteile darstellen.

Die der Erfindung zugrundeliegende Aufgabe besteht darin, den Fertigungsaufwand zu reduzieren und die Messgenauigkeit der MID's zu erhöhen.

Zur Lösung der Aufgabe dienen die Merkmale des kennzeichnenden Teils des Anspruchs 1 in Verbindung mit den Merkmalen des Oberbegriffs. Hierbei weist die Magnetfelderzeugungseinrichtung eine Halterung zur Aufnahme mindestens eines Magnetfelderzeugers z. B. mindestens eines Permanentmagneten eine Halterung in Form einer Platine auf, mit mindestens einer stromdurchflossenen Leiterschleife, mindestens einer Spule oder auch mindestens einer auf der Platine angeordneten Leiterbahn. Bei der Ausbildung der Magnetfelderzeugungseinrichtung als Platine mit Leiterbahnen oder Leiterschleifen bzw. auch mit einer daran angeordneten Spule eröffnet sich die Möglichkeit die mindestens eine Messelektrode, nicht wie nach dem Stand der Technik vorgesehen, innerhalb des freien Querschnittes des Rohrleitungsabschnittes an der Innenwandung des Rohrleitungsabschnittes im Bereich des Magnetfeldes anzuordnen, sondern unmittelbar an oder auf der Platine. Hierbei sind zwei oder mehrere Messelektroden vorgesehen, wobei zwei Messelektroden einander diagonal gegenüberliegend im Bereich des Magnetfeldes angeordnet sind. Die Messelektroden können hierbei auf der Innenseite des Rohrleitungsabschnitts angeordnet sein, also in Kontakt mit dem Medium stehen; oder es erfolgt eine kapazitive Messung durch die Elektroden z. B. durch Anordnung der Messelektroden auf der Außenseite des Rohrleitungsabschnitts. Die kombinierte Anordnung von Messelektroden und Magnetfelderzeugern auf ein und derselben Platine oder Halterung hat den großen Vorteil eines reproduzierbaren Aufbaus eines solchen MID's, da die relative Position der Messelektroden zueinander und zur Magnetfelderzeugungseinrichtung durch Fixierung an der Platine immer identisch ist, weshalb auch mit reproduzierbaren Messergebnissen zu rechnen ist. Insofern können auch sämtliche Strom- und Signalleitungen für die Leiterbahnen bzw. die Leiterschleifen oder Spule durch eine einzige Öffnung in der Wandung des Rohrleitungsabschnittes nach außen zur eigentlichen Auswerte- und Anzeigeeinrichtung geführt werden. Es entfällt insofern auch das sonst übliche Gehäuse für die Aufnahme der Magnetfelderzeugungseinrichtung auf dem Außenumfang des Rohrleitungsabschnitts. Das heißt, die Messeinrichtung baut kleiner als die nach dem Stand der Technik. Somit befindet sich lediglich noch die Auswerteeinrichtung mit der entsprechenden Messelektronik außerhalb des Rohrleitungsabschnittes. Insofern eröffnet diese Konstruktionsvariante die Möglichkeit der Verwirklichung einer sogenannten Einplatinenlösung. Das heißt, dass die Platine als solche im freien Querschnitt des Rohrleitungsabschnittes fest verankert durch die Wandung des Rohrleitungsabschnittes abgedichtet nach außen geführt wird, und dort insbesondere auch einerseits den Anschluss für die Stromversorgung aufweist, aber auch andererseits Mikrokontrolle A/D-Wandler bzw. D/A-Wandler als Teil der Auswerteeinrichtung aufnimmt.

Weitere vorteilhafte Merkmale und Ausgestaltungen der Erfindung ergeben sich aus den Unteransprüchen.

Es wurde bereits an anderer Stelle darauf hingewiesen, dass die Magnetfelderzeugungseinrichtung insbesondere aufgrund der geringeren Leistung kleiner baut, insbesondere baut eine Platine mit z. B. Leiterbahnen aber auch wesentlich schmaler als nach dem Stand der Technik. So hat sich in diesem Zusammenhang herausgestellt, dass bei Verwendung einer mit Leiterbahnen versehenen Platine die Stärke einer solchen Platine einschließlich der Messelektroden maximal ein Viertel bis ein Drittel des Durchmessers des freien Querschnitts des Rohrleitungsabschnittes beträgt. Das heißt, die Störung der Strömung durch die Platine ist minimal.

Insofern besteht dann noch die Möglichkeit diese Platine z. B. im Querschnitt tragflügelförmig einzuhausen, d. h. zu ummanteln, um so den Strömungswiderstand weiter zu minimieren. Das Material zum Einhausen bzw. Beschichten der Platine kann allerdings nicht nur strömungswiderstandsminimierend an der Platine angeordnet sein, sondern auch selbst aufgrund der Oberflächengestaltung strömungswiderstandsminimierend ausgebildet sein. Bevorzugt ist das Material zur Einhausung auch elektrisch isolierend und/oder korrosionsbeständig und/oder chemisch beständig und/oder mechanisch beständig und ggf. auch ungiftig und biologisch abbaubar in Abhängigkeit von dem jeweiligen Einsatzzweck.

Durch eine strömungswiderstandsminimierende Beschichtung wird des Weiteren erreicht, dass im Medium vorhandene Partikel sich nicht an der Platine anlagern können.

Die Platine oder Halterung oder auch die eingehauste Platine sind vorteilhaft von beiden Enden in den Rohrleitungsabschnitt eingelassen. Dies hat den Vorteil, dass die Platine oder Halterung in der Strömung nicht schwingt.

Anhand der Zeichnungen wird nachstehend sowohl der Stand der Technik als auch die Erfindung beispielhaft näher erläutert.

Fig. 1   zeigt schematisch die Ausbildung eines MID's nach dem Stand der Technik;

Fig. 2   zeigt eine erste Ausführungsform eines MID's nach der Erfindung;

Fig. 3   zeigt eine zweite Ausführungsform eines MID's nach der Erfindung;

Fig. 4a   zeigt eine dritte Ausführungsform eines MID's nach der Erfindung;

Fig. 4b   zeigt einen Längsschnitt der Fig. 4a.

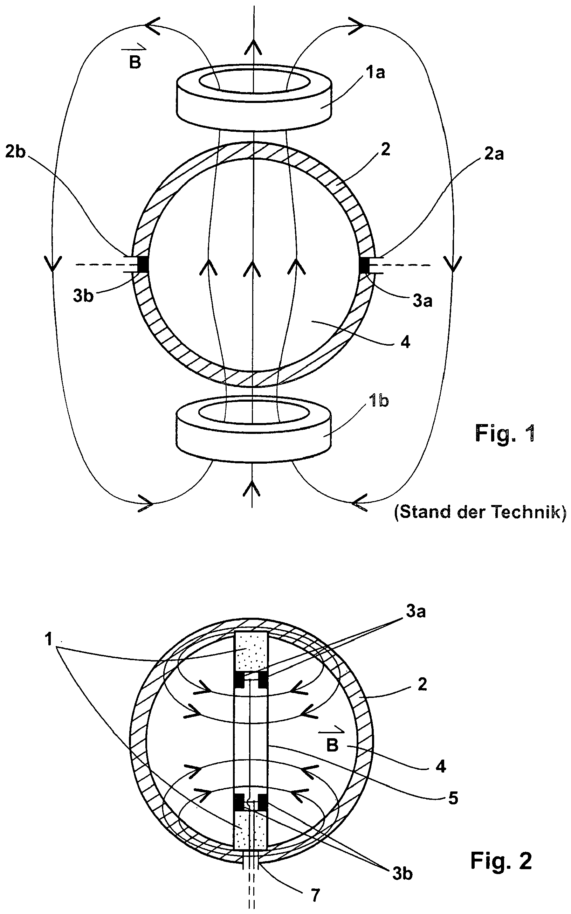

Gemäß Fig. 1 (Stand der Technik) ist der Rohrleitungsabschnitt mit 2 bezeichnet. Der freie Querschnitt des Rohrleitungsabschnitts ist mit dem Bezugszeichen 4 versehen. Auf der Innenseite des Rohrleitungsabschnittes befinden sich die beiden Messelektroden 3a, 3b, wobei außerhalb des Rohrleitungsabschnittes 2 einander gegenüberliegend zwei Magnetspulen 1a, 1b vorgesehen, die die schematisch angedeuteten Magnetfeldlinien erzeugen. Erkennbar ist, dass im Bereich der beiden Messelektroden 3a, 3b jeweils Durchtrittsöffnungen 2a, 2b in der Wandung des Rohrleitungsabschnittes vorgesehen sind, was einen erhöhten Dichtungsaufwand bedeutet.

Im Folgenden werden, sofern sinnvoll, die Bezugszeichen für gleiche Gegenstände in gleicher Weise verwendet.

In Fig. 2 ist eine erste Ausführungsform des erfindungsgemäßen MID's dargestellt. Hierbei ist innerhalb des Rohrleitungsabschnittes 2 aus einem magnetisierbaren Material eine Platine 5 vorgesehen, wobei die Platine sowohl eine Magnetspule als Magnetfelderzeuger 1 als auch die beiden Messelektroden 3a, 3b aufweist. Die Magnetfeldlinien werden aufgrund des magnetisierbaren Materials des Rohrleitungsabschnitts durch den Rohrleitungsabschnitt rückgeführt. Die Platine 5 ist als solche, um das Flattern in der Strömung des Mechanismus zu verhindern, in der Rohrwandung des Rohrleitungsabschnittes eingelassen fixiert. Wenn die beiden Messelektroden zusammen mit der Magnetspule Bestandteil der Platine also der Halterung sind, dann kann eine solche Platine vorgefertigt werden und quasi als vorgefertigte Einheit in den freien Querschnitt des als Messrohr ausgebildeten Rohrleitungsabschnittes eingesetzt werden. Das heißt, es ergibt sich hieraus eine erhöhte Reproduzierbarkeit der Messwerte. Darüber hinaus weist auch hier der Rohrleitungsabschnitt 2 eine Durchtrittsöffnung 7 für die Stromversorgung der Spule und die Signalleitungen der Messelektroden auf.

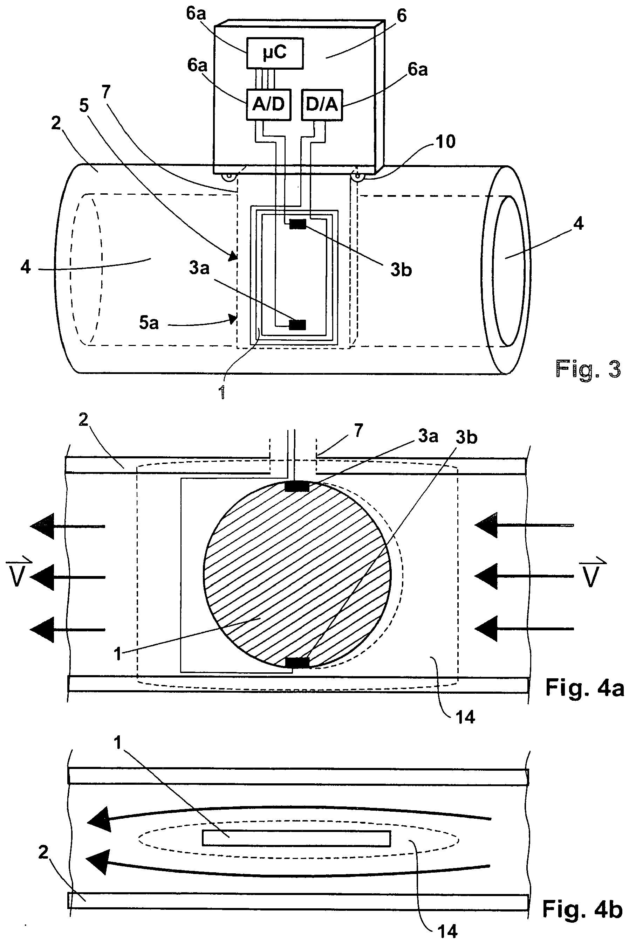

Eine von Fig. 2 modifizierte Ausführungsform ergibt sich aus Fig. 3. Dort ist ebenfalls eine Platine 5 vorgesehen, die im freien Querschnitt 4 des Rohrleitungsabschnittes 2 angeordnet ist, und die die beiden Messelektroden 3a, 3b aufweist. Die Platine besitzt einen Platinenkopf 6, der der Aufnahme weiterer elektronischer Komponenten 6a wie z. B. A/D-Wandler, D/A-Wandler und Mikrokontroller als Bestandteil einer Messelektronik einer Auswerteeinheit dient. An den Platinenkopf 6 schließt im freien Querschnitt des Rohrleitungsabschnittes 2 der darin angeordnete Platinenabschnitt 5a der Platine 5 mit Leiterbahnen oder Leiterschleifen als Magnetfelderzeuger 1 an, wobei im Übergang von dem Platinenkopf 6 zum Platinenabschnitt 5a eine flüssigkeits- und/oder gasdichte Abdichtung gegenüber dem Rohrleitungsabschnitt 2 vorgesehen ist, z. B. durch O-Ringe 10.

Bei der Darstellung gemäß den Fig. 4a, 4b ist das MID durch eine Beschichtung 14 eingehaust in dem freien Querschnitt 4 des Rohrleitungsabschnittes 2 angeordnet. Das MID selbst umfasst hierbei einen Magnetfelderzeuger 1 in der Art z. B. eines Permanentmagneten, der ein Magnetfeld erzeugt, der senkrecht zur Durchflussrichtung durch das Medium umspült wird. Auf dem Permanentmagneten befinden sich die Messelektroden 3a, 3b. Die Signalkabel für die Messelektroden werden durch eine Öffnung 7 in der Wandung des Rohrleitungsabschnitts 2 abgedichtet nach außen geführt.

Bezugszeichenliste:

1   Magnetfelderzeuger
1a   Magnetspule
1b   Magnetspule
2   Rohrleitungsabschnitt
3a   Messelektrode
3b   Messelektrode
4   freier Querschnitt des Rohrleitungsabschnitts
5   Platine
5a   Platinenabschnitt
6   Platinenkopf
7   Durchtrittsöffnung
10   O-Ring
14   Beschichtung der Platine

**Patentansprüche**

1. Magnetisch induktive Durchflussmesseinrichtung (MID) zur Ermittlung der Strömungsgeschwindigkeit eines flüssigen oder gasförmigen Mediums in einem Rohrleitungsabschnitt (2), wobei die Durchflussmesseinrichtung mindestens zwei Messelektroden (3a, 3b) in einem durch eine Magnetfelderzeugungseinrichtung erzeugten Magnetfeld aufweist, wobei die Magnetfelderzeugungseinrichtung zumindest partiell innerhalb des freien Querschnitts (4) des Rohrleitungsabschnitts (2) angeordnet ist, wobei die Magnetfelderzeugungseinrichtung eine Halterung zur Aufnahme mindestens eines Magnetfelderzeugers (1) und die mindestens zwei Messelektroden (3a, 3b) umfasst, **dadurch gekennzeichnet, dass** die Halterung als Platine (5) ausgebildet ist, wobei die Platine (5) im freien Querschnitt (4) des Rohrleitungsabschnitts (2) angeordnet ist.

2. Magnetisch induktive Durchflussmesseinrichtung (MID) nach Anspruch 1, **dadurch gekennzeichnet, dass** der Magnetfelderzeuger (1) als mindestens ein Permanentmagnet, als mindestens eine stromdurchflossene Leiterschleife oder als mindestens eine stromdurchflossene Spule ausgebildet ist.

3. Magnetisch induktive Durchflussmesseinrichtung (MID) nach einem der voranstehenden Ansprüche, **dadurch gekennzeichnet, dass** die Platine (5) in der Wandung des Rohrleitungsabschnittes (2) eingelassen ist.

4. Magnetisch induktive Durchflussmesseinrichtung (MID) nach einem der voranstehenden Ansprüche, **dadurch gekennzeichnet, dass** der Rohrleitungsabschnitt (2) in der Wandung einen Durchlass (7) für Strom- und Signalleitungen aufweist.

5. Magnetisch induktive Durchflussmesseinrichtung (MID) nach einem der voranstehenden Ansprüche, **dadurch gekennzeichnet, dass** die Stärke der Platine (5) einschließlich des Magnetfelderzeugers (1) und der Messelektroden (3a, 3b) maximal ein Drittel des Durchmessers des freien Querschnitts des Rohrleitungsabschnittes (2) beträgt.

6. Magnetisch induktive Durchflussmesseinrichtung (MID) nach einem der voranstehenden Ansprüche, **dadurch gekennzeichnet, dass** die Platine (5) innerhalb des Rohrleitungsabschnitts (2) mit einer Beschichtung (14) ummantelt ist.

7. Magnetisch induktive Durchflussmesseinrichtung (MID) nach Anspruch 6, **dadurch gekennzeichnet, dass** die Beschichtung (14) elektrisch isolierend und/oder korrosionsbeständig und/oder chemisch beständig und/oder mechanisch beständig ausgebildet ist.

8. Magnetisch induktive Durchflussmesseinrichtung (MID) nach einem der voranstehenden Ansprüche, **dadurch gekennzeichnet, dass** der Rohrleitungsabschnitt (2) aus einem magnetisierbaren oder paramagnetischen Material ausgebildet ist.

**Claims**

1. A magnetically inductive flow meter for determining the flow rate of a liquid or gaseous medium in a pipe line section (2), wherein the flow meter comprises at least two measuring electrodes (3a, 3b) in a magnetic field generated by a magnetic field-generating arrangement, wherein the magnetic field-generating arrangement is arranged at least partially within the free cross-section (4) of the pipeline section (2), wherein the magnetic field-generating arrangement includes a mount for receiving at least one magnetic field generator (1) and the at least two measuring electrodes (3a, 3b), **characterized in that** the mount is designed as a plate (5), wherein the plate (5) is disposed in the free cross-section (4) of the pipeline section (2).

2. The magnetically inductive flow meter according to claim 1, **characterized in that** the magnetic field generator (1) is designed as at least a permanent magnet, as at least one current-carrying conductor loop or as at least one current-carrying coil.

3. The magnetically inductive flow meter according to one of the aforementioned claims, **characterized in that** the plate (5) is embedded in the wall of the pipeline section (2).

4. The magnetically inductive flow meter according to one of the aforementioned claims, **characterized in that** the pipeline section (2) comprises a passage (7) in the wall for power and signal lines.

5. The magnetically inductive flow meter according to one of the aforementioned claims,

**characterized in that**

the thickness of the plate (5) including the magnetic field generator (1) and the measuring electrodes (3a, 3b) amounts to at most a third of the diameter of the free cross-section of the pipeline section (2).

6. The magnetically inductive flow meter according to one of the aforementioned claims,
   **characterized in that**
   the plate (5) is covered with a coating (14) within the pipeline section (2).

7. The magnetically inductive flow meter according to claim 6,
   **characterized in that**
   the coating (14) is designed to be electrically insulating and/or corrosion resistant and/or chemically resistant and/or mechanically resistant.

8. The magnetically inductive flow meter according to one of the aforementioned claims,
   **characterized in that**
   the pipeline section (2) is made of a magnetizable or paramagnetic material.

**Revendications**

1. Débitmètre magnéto-inductif pour déterminer la vitesse d'écoulement d'un milieu liquide ou gazeux dans un segment de conduite (2), le débitmètre comportant au moins deux électrodes de mesure (3a, 3b) dans un champ magnétique généré par un dispositif générateur de champ magnétique,
   où le dispositif générateur de champ magnétique est disposé au moins en partie à l'intérieur de la section libre (4) du segment de conduite (2),
   où le dispositif générateur de champ magnétique comporte un support destiné à recevoir au moins un générateur de champ magnétique (1) et qui comporte au moins deux électrodes de mesure (3a, 3b)
   **caractérisé en ce que**
   le support est réalisé sous forme de platine (5), où la platine (5) est disposée dans la section libre (4) du segment de conduite (2).

2. Débitmètre magnéto-inductif selon la revendication 1,
   **caractérisé en ce que**
   le générateur de champ magnétique (1) prend la forme d'au moins un aimant permanent, d'au moins une boucle conductrice parcourue par un courant ou d'au moins une bobine parcourue par un courant.

3. Débitmètre magnéto-inductif selon l'une des revendications précédentes,
   **caractérisé en ce que**
   la platine (5) est enchâssée dans la paroi de la section de conduite (2).

4. Débitmètre magnéto-inductif selon l'une des revendications précédentes,
   **caractérisé en ce que**
   la section de conduite (2) comporte un passage (7) dans la paroi pour des câbles électriques et de signalisation.

5. Débitmètre magnéto-inductif selon l'une des revendications précédentes,
   **caractérisé en ce que**
   l'épaisseur de la platine (5), y compris le générateur de champ magnétique (1) et les électrodes de mesure (3a, 3b), est égale au plus à un tiers du diamètre de la section libre de la section de conduite (2).

6. Débitmètre magnéto-inductif selon l'une des revendications précédentes,
   **caractérisé en ce que**
   la platine (5) est revêtue d'un revêtement (14) à l'intérieur de la section de conduite (2).

7. Débitmètre magnéto-inductif selon la revendication 6,
   **caractérisé en ce que**
   le revêtement (14) est électriquement isolant et/ou résistant à la corrosion et/ou chimiquement résistant et/ou mécaniquement résistant.

8. Débitmètre magnéto-inductif selon l'une des revendications précédentes,
   **caractérisé en ce que**
   la section de conduite (2) est composée d'un matériau magnétisable ou paramagnétique.

**Fig. 1**

(Stand der Technik)

**Fig. 2**

Fig. 3

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6530285 B1
- DE 102007004827 B4

- US 3937080 A1